# EUROPEAN PATENT APPLICATION

(11) **EP 1 351 452 A1**
(43) Date of publication of application: **08.10.2003**
(21) Application number: 02252378.1
(22) Date of filing: 02.04.2002
(51) Int. Cl.: H04L 12/56

(54) **Network capacity management system**

(71) Applicant: BRITISH TELECOMMUNICATIONS public limited company, London EC1A 7AJ (GB)
(72) Inventor: Mishra, Richard, Kentish Town, London NW5 2SE (GB); Burg, Jonathan Peter, London NW3 7BT (GB)
(74) Representative: Lidbetter, Timothy Guy Edwin

(57) **Abstract**

A capacity management system is provided for managing the set up of connection paths between nodes of interconnected network domains. Each domain has a domain management system for setting up connection paths between nodes within the domain in response to service orders. Data is stored defining relationships between a plurality of connection sites in different domains, interconnectable for data communications, and when a connection path is to be set up, a subset of the interconnection sitesis selected on the basis of the relationship data. Route costs are determined for connection paths between the sites to be connected, corresponding to each of the subset of interconnection sites, and a preferred connection path can then be selected on the basis of at least the determined route costs.

## Description

This invention relates to network capacity management systems for managing the set up of connection paths between nodes of a telecommunications network comprising a plurality of interconnected network domains.

In known telecommunications networks, network traffic capacity can be booked in advance, on request of the user. It is then necessary to meet this request by allocating a path through the network having the required capacity using a capacity management system. The customer may have specific requirements, bandwidth and quality of service (QoS) requirements. The path allocated to the customer may then be used in any way he requires, e.g. to route individual calls. It should be noted that capacity management involves different requirements to the handling of data traffic flow. In particular, capacity management has to consider future requirements for capacity, and not just the real-time requirements that a traffic management system has to deal with. Ideally a capacity management system should also be able to provide capacity immediately, perhaps as a premium ("Just In Time") service. Moreover, in a traffic management system, it is normally optimal to try to spread call traffic over as many different routes as possible, to minimise interference and ensure minimum disruption if one route should fail. In capacity management, the optimum is to aggregate low capacity routes where possible, to fully load each link that is used, thereby keeping other links free. The free links can then be used if a subsequent requirement for a high-capacity link is received, without having to first re-allocate low capacity links.

The availability of connections between nodes within the network depends on a number of factors which are constantly changing. For example, equipment is taken out of service for maintenance, and re-instated afterward. This may be on a planned or emergency basis. Moreover, as capacity is allocated to one user it becomes unavailable for use by others.

In order to control the routing of transmissions through a network, it is therefore necessary to allocate capacity over the network between the source and destination. Various criteria need to be addressed, such as the capacity required, the time the capacity is needed, the length of time needed, and need for robustness (addressed for example by routing part of the capacity over one path and part over another, a practice known as 'diversity', such that a connection is maintained, albeit at lower capacity, even should one path fail, and any variations in availability of capacity e.g. because of planned maintenance, or other users of the system.

In order to establish the routing for network capacity across a multi-domain network, the various subpath connections to be used in the network need to be allocated and reserved. The capacity may be required immediately, or the capacity may be reserved in advance against an expected requirement.

The routing function is further complicated in a multi-domain network in that allocating a route across multiple domains generally requires a complex assessment in the context of the overall network to determine the most efficient end to end path through the multiple domains.

A multi-domain network may take various forms. The individual domains may consist of separate network domains utilising different data communications technologies, such as DSL (Digital Subscriber Link), ATM (Asynchronous Transfer Mode), PDH (Plesiochronous Digital Hierarchy) and SDH (Synchronous Digital Hierarchy), and/or separately managed or owned network domains, which are interconnected. The problem also arises between multiple network providers for IPVPNs (Internet Protocol Virtual Private Networks), which are treated as separate network domains. A multi-domain network may exist where a service provider owns, or cooperating service providers own, multiple telecommunications networks, whether generally geographically overlaid or generally geographically non-overlaid, which are interconnected.

Conventional multi-domain network capacity management systems can rely on a copy of the complete, detailed domain models held in the domain managers, usually based on a network inventory import. The combined models are then used to determine routing dynamically. Alternatively, systems have been implemented using total delegation of the routing task across multiple systems. For example a workflow manager may request domain managers to carry out the routing task with no internal model of the entire network.

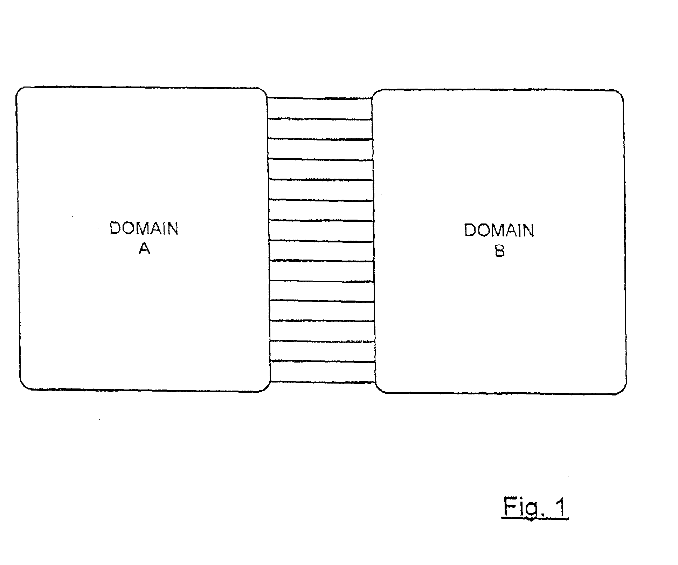

Conventional systems use a "network of logical domains" model. End to end connections are represented as in Figure 1. In this view, each domain, domains A and B, is represented as a unitary entity and the interconnection points are represented as a single set of logical connections.

This form of multi-domain model impacts the ability to determine potential connectability of domains negatively. As each domain's view of resources is effectively divorced from physical context, the only way to track where domains can be inter-connected is either to "trace through" the entire network of domains to search for suitable interconnection points, usually based on pre-wired physical connectivity. This requires a high performance search algorithm as well as the import of all connectivity data and inventory data into the inter-domain model.

Further, where domains are highly interconnected, the number of links (and consequently, potential links) becomes extremely large. Each connection point can play a role as an access point into a domain or an interconnection point between domains, or both.

Yet, further, in a highly geographically overlaid multi-domain network, "hopping" back and forth across domain interconnections instead of using a single trans-domain connection becomes a candidate solution to a routing requirement.

The "network of logical domains" approach therefore has various drawbacks, including increasing the amount of data managed by one system, replicating data already held in the domain managers, replicating the modelling effort in each system, hence increasing data discrepancy, increasing time to field for solution, and performance overheads to route across an entire network.

The problem of capacity management in a multi-domain communications network has been addressed in the article "The Need for Inter-Domain Management to Control the Network of the Future", Baudouin Boreux, BTEJ, August 1999, No. 38.

The problem of capacity management in a multi-domain communications network has also been addressed by existing academic and industrial projects. The Telemanagement Forum Connection and Service Management Information Modelling project (CasMiM) aims to produce a general business agreement and solution set (external specification) for a generic "connection management" solution. The MISA project aims to deliver a solution for combined SDH and ATM network management from architecture through to implementation, across diverse vendors, business unit boundaries and third party networks.

These known multi-domain network capacity management systems still require large amounts of resources, and/or lengthy processes, to set up cross-domain connection paths in the case where many interconnection points between the domains exist.

It would be desirable to provide a method of setting up connection paths whilst reducing the resources required to effectively model and deliver activated services in a multi-domain communications network in which the domains are highly interconnected.

In accordance with the present invention there is provided a method of operating a capacity management system for managing the set up of connection paths between nodes of a communications network comprising a plurality of interconnected network domains, each said domain comprising a domain management system for setting up connection paths between nodes within the domain in response to service orders, said method comprising:
storing data defining relationships between a plurality of connection sites, each connection site comprising at least one node within one of said plurality of domains and said connection sites comprising a plurality of interconnection sites comprising at least two nodes, of different ones of said plurality of domains, which are interconnectable for data communications;
identifying first and second connection sites between which a connection path is to be set up;
selecting a subset of said plurality of interconnection sites on the basis of relationships between the plurality of interconnection sites and the first connection site, as defined by said relationship data;
in response to selecting the subset, determining route costs for connection paths, between the first and second connection sites, corresponding to each of the subset of interconnection sites, the connection paths including first subpaths in a first domain and second subpaths in a second domain;
selecting a preferred connection path on the basis of at least the determined route costs.

The general case of cost modelling an n node multi-domain network would result in a half matrix of route costs with dimension n x (n-1). The generation of such a matrix would involve route finding between each node, which would establish a path between the nodes and allow the cost to be calculated. This would need to be carried out every time the network changed. This 'perfect' representation of the routing is extremely resource intensive. In contrast, the present invention provides for a heuristic approach, using a partial network model based on physical connection sites, that provides good connection path selection, whilst reducing the resource requirements involved.

Further features and advantages of the invention will become apparent from the following description of preferred embodiments of the invention, made with reference to the accompanying drawings, wherein:
Figure 1 is a schematic illustration of a prior art network provisioning model;
Figure 2 is a schematic plan view of a section of a highly geographically-overlaid multi-domain network;
Figure 3 is a schematic illustration of a network capacity management system in accordance with an embodiment of the invention;
Figure 4 is a flow diagram illustrating processes carried out by a network capacity management system in accordance with an embodiment of the invention; and
Figure 5 is a flow diagram illustrating processes carried out by a domain manager in accordance with an embodiment of the invention.

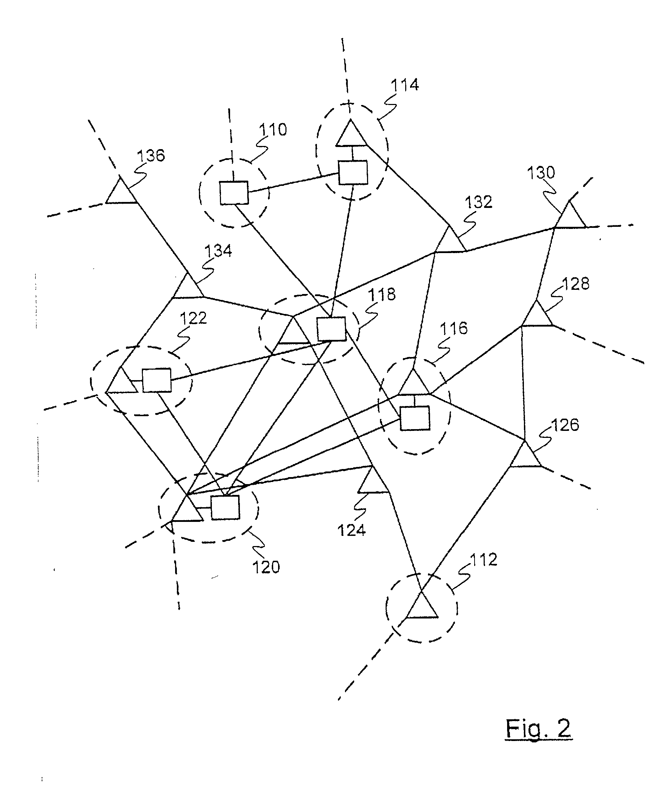

Figure 2 illustrates a section of a highly geographically-overlaid multi-domain communications network in geographical plan view. By "highly geographically-overlaid" we mean that the geographic area defined by the nodes at the edge of at least one of the domains includes a majority of the geographic area defined by the nodes at the edge of another of the domains. The network illustrated in Figure 2 comprises two separate domains, in this embodiment an SDH domain and a PDH domain, with nodes of the SDH and PDH domains represented by squares and triangles respectively. Within each domain, intra-domain communication links run between nodes of the domain.

Within the network, connection sites, typically serving exchanges, are defined. Exemplary connection sites are indicated using dashed rings surrounding nodes within the network. The connection sites include a connection site 110 which includes a node within the first domain and no node within the second domain, a connection site 112 which includes a node within the second domain and no node within the first domain, interconnection sites 114, 116, 118, 120, 122, which include a node within the first domain and a node within the second domain. The interconnection sites include sites 114, 116, 120, 122 at which physical connections between domains already exist, and sites, such as site 118, at which no physical connection yet exists, but connection can be made by tie-jumpering due to the physical co-location of the equipment. In addition, the network includes nodes 124, 126, 128, 130, 132, 134, 136, which are not co-located at a connection site, but are located remote from the connection sites, and also form part of the network infrastructure.

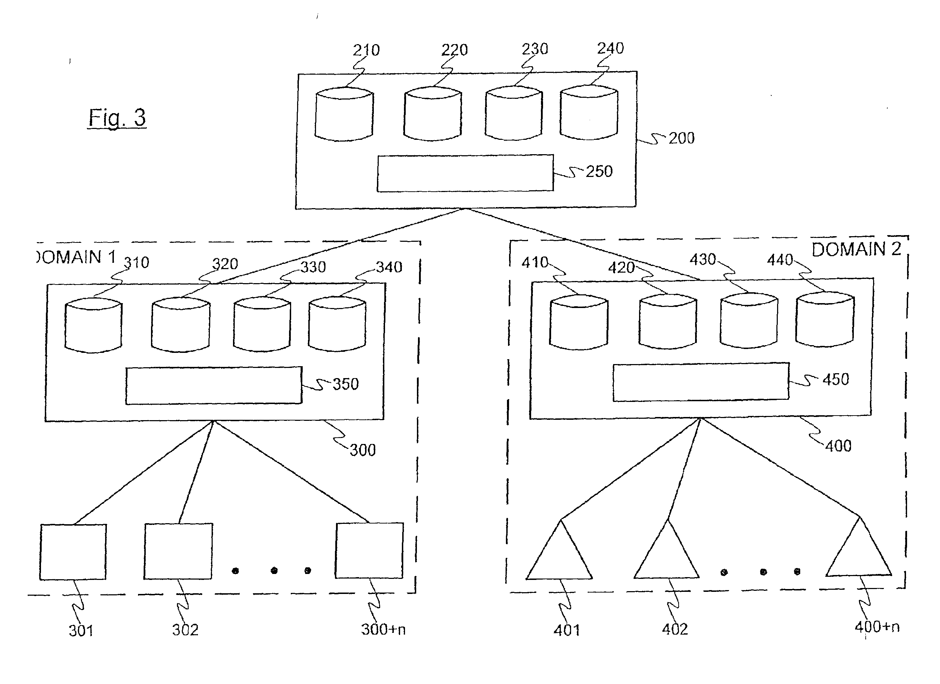

Referring now to Figure 3, there is shown part of a network capacity management system (NCMS) 200 for managing the setting up of cross-domain connections in a multi-domain network, such as that shown in part in Figure 2. The NCMS includes a service order store 210, a network model store 220, a rules store 230, a route table store 240 and a control system 250. The NCMS 200 is typically implemented on a distributed data processing system including a plurality of data processors, such as a network of computers.

The NCMS 200 is connected, via data communications links, to separate domain managers 300, 400. For reasons of simplicity only two domains are shown, however it should be appreciated that the network capacity management system 200 may be used to set up connections across three or more domains. Each domain manager includes a service order store 310; 410, a network model store 320; 420, a rules store 330; 430, a route table store 340; 440 and a control system 350; 450. Each domain manager 300, 400 is connected, via data communications links, to a set of communications nodes 301, 302...300+n; 401, 402...400+n, within its own respective domain. Each domain manager is typically implemented on a distributed data processing system including a plurality of data processors, such as a network of computers. The construction of elements with each domain is generally known to those skilled in the art.

The NCMS 200 interacts with maintenance staff to issue instructions for orders held in the order store 210 which, either automatically or by way of instructions to technical staff, cause the network to be modified to meet the planned changes. This process is therefore interactive, changes being carried out by the configuration component, and the effects of such changes on the domain being monitored in order to conduct capacity planning requirements.

The NCMS 200 holds geographical relationship data, including geographical location data and route cost data, for all connection sites within the network. Each domain manager holds the service details and master record of the logical network inventory for the domain under its management, and extracts therefrom service data, relating to the defined connection sites, which is passed on to the NCMS 200 intermittently to update the network model 220 and the network route table 240.

The NCMS 200, in its network model 220, rules 230 and route table 240, represents the entire network as a set of connection sites. Domains are not modelled directly. A connection site is defined to exist wherever domains are interconnectable or equipment has an access point for connection to a domain. Co-located domain nodes within a connection site must be inter-connected or interconnectable, i.e. sufficiently proximate for tie-jumpering. It is then sufficient to maintain only high level information in the NCMS 200, such as which connection sites exist in the network, which domain capabilities are available at each connection site and cost of routing between a pair of connection sites using a particular domain.

The primary task of the NCMS 200 is provisioning network services, generating orders for connecting customer sites to nearest capable end-point network connection sites, and generating orders for routing across the network of domains between those end-point connection sites to define a network configuration required to support the a service which has been requested in a service order.

In order to be able to configure the network for service delivery, the NCMS 200 determines by look-up from network model 220 the first and second end-point connection site(s) for the required service, resolves a least-cost solution for the service based on pre-defined service requirements, and delegates to the domain managers 300, 400 the routing and activating of service components within their domains.

The network model 220 holds a list of connection sites within the network, and geographic location data for each connection site within the network. Geographic location co-ordinates may be used for specifying the location of a connection site, using a suitable worldwide coding scheme, such as the latitude-longitude system. Alternatively, a location code may be used to define the locations. A mapping is then used to translate between codes and co-ordinates.

The NCMS rules 230 include rules for sequencing or combinations of service components, precedence rules for domains, provisioning rules, domain compatibility rules, and domain connectability constraint rules. When two or more domains can be used for a particular network service, NCMS rules 230 are used to prevent undesired hopping between domains. The rules declare a preferred domain to be used, allowing NCMS 200 to activate network connection paths according to efficient design criteria.

The NCMS route table 240 supports the NCMS 200 in coarse routing set up prior to delegation to the domain. At any given interconnection site there exists a set of domain capabilities, each with a set of attributes describing the utility of that capability in terms of quasi-static availability and route costs, which are held in route table 240. Such availability indicates whether a capability at a connection site can be used for a required service component. The availability and route cost data is quasi-static because it is derived intermittently from the domain managers.

The NCMS 200 sets up cross domain communication paths by efficient assessment of near-optimal routes for the cross domain routing. At the domain level, there may be more than one possible path (and route cost) between a pair of connection sites. The domain managers, on receiving a service order from the NCMS 200, respond by dynamically selecting cheapest routes within a domain according to intra-domain route finding procedures.

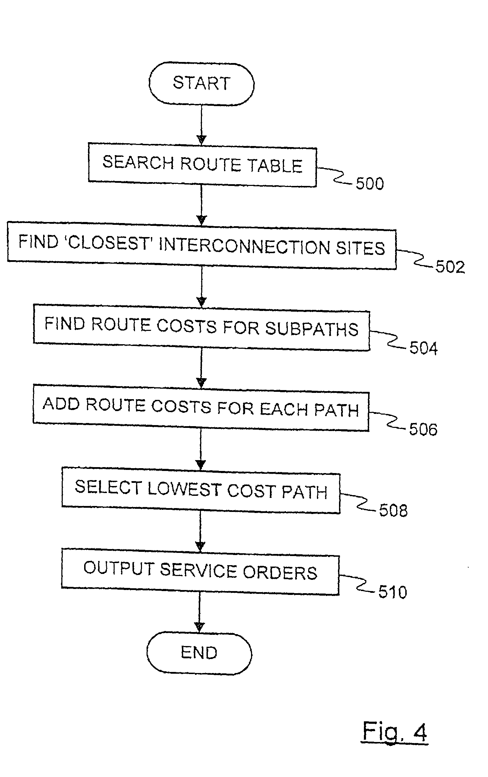

Figure 4 illustrates a procedure carried out by the NCMS 200 to set up a cross-domain communication path. In this situation, two or more domains are used to satisfy on order for a network service, between two selected connection sites. If the final termination point of the service being set up is a customer site (not shown in Figure 2), the NCMS 200 selects an end-point connection site identity held in network model 220 for that customer site for the service in question, by virtue of an access path that has been planned or built for the customer site.

The NCMS 200 uses the search procedure to identify a preferred interconnection site, or sites, to use to transit between domains, whilst attempting to find a solution satisfying overall route cost reduction criteria.

Referring now to Figure 4, in response to receiving a new service order, NCMS 200 identifies the first and second end-point connection sites for resolving the order by determining the service requirement, and searches route table 240 to identify potential interconnection sites between the identified end-point connection sites, step 500. The NCMS 200 then filters the potential interconnection sites in order to select a smaller subset of the "closest" interconnection sites to at least one, and in some cases, both, of the end point connection sites, step 502. The number of interconnection sites within the subset is preferably limited below a predetermined threshold (e.g. a maximum of 10 interconnection sites for the, or each, end-point connection site). The criteria for determining "closeness" may include one or both of:
a) geographical proximity, being calculated for example as line-of-sight distances between the interconnection sites and the end-point connection site(s) by means of the geographical location information stored in the network model 220;
b) least route cost, being determined for example from route costs for traversing the interconnection sites and the end-point connection site(s) by means of the available domain capability in the end-point connection site(s) stored in route table 240.

After determining the subset of "closest" interconnection site(s), the route costs for the subpaths between the interconnection site(s) and the end-point connection sites, using a preferred domain when available between those sites, are determined from the route table 240, step 504, and the route costs for each possible subpath between those selected sites are summed to generate total route costs for each possible cross-domain connection path, step 506. The preferred interconnection site is then selected, corresponding to the least total route cost, step 508. An ordered list of total route costs may also be generated, for manual selection of a preferred cross-domain connection path (which may, in some cases not be the least-cost path).

Having established the preferred interconnection site(s), the NCMS 200 outputs order requests, step 510, to the appropriate domain managers for the set up of subpath connections across the individual domains, and outputs any necessary tie-jumpering requests to a manual network configuration management system.

In the case of having a preferred domain, in the case of two domains, one of the end-point connection sites will be in a "minimal" domain and the other will in the "maximal" domain. Network domain utilisation rules held in rules 230 are used to determine the maximal domain, to be used preferentially and the minimal domain, to be used less preferentially. In embodiments using SDH and PDH domains, the SDH domain generally will be the maximal domain, and PDH the minimal domain.

The size of the set of interconnection sites selected in step 502 is a parameter which may be varied depending on performance criteria. A large set will reduce performance, but too small a set can significantly reduce the chances of finding an optimal solution.

In step 502, both a maximum number of interconnection sites in the subset set and the maximum allowable cost may be factors used to limit the size of the set (e.g. no more than 10, but no cost greater than X units).

In addition, if a larger number of interconnection sites are clustered around the end-point, i.e. all are found to be "close", all may to be considered or some other criteria (e.g. declared network structure) may be used to perform the filtering.

If two end point connection sites are in the maximal domain then only the maximal domain may be used for routing between them. The NCMS 200 then becomes a pass-through to the domain manager for the maximal domain.

Where two end-point connection sites are in a minimal domain, two interconnection sites may be used and three subpaths may be generated (e.g. PDH/SDH/PDH). The step (502) of identifying a subset of "closest" interconnection sites may be repeated for both the first and second end-point terminations. The step (504) of establishing the cost for each subpath may be carried out between every possible pair of interconnection sites, which include one site from each subset, and from each end-point connection site. The step (506) of establishing the total cost of the solutions, may involve totalling route costs for three subpaths.

Where there are more than two end-point connection sites, for example in a point-to-multipoint service, the procedure may be carried out for each end-point connection site.

From the above, it will be understood that NCMS 200 improves the cross-domain connection set-up procedure using "presearching" by means of stored relationships (geographical or route cost) between the interconnection sites and at least one of the end-point connection sites, followed by route costing for the routes including the preselected interconnection sites, whereby a preferred route is selected. The preferred route is then set up by means of separately processed orders sent to the domain managers for setting up the corresponding subpaths.

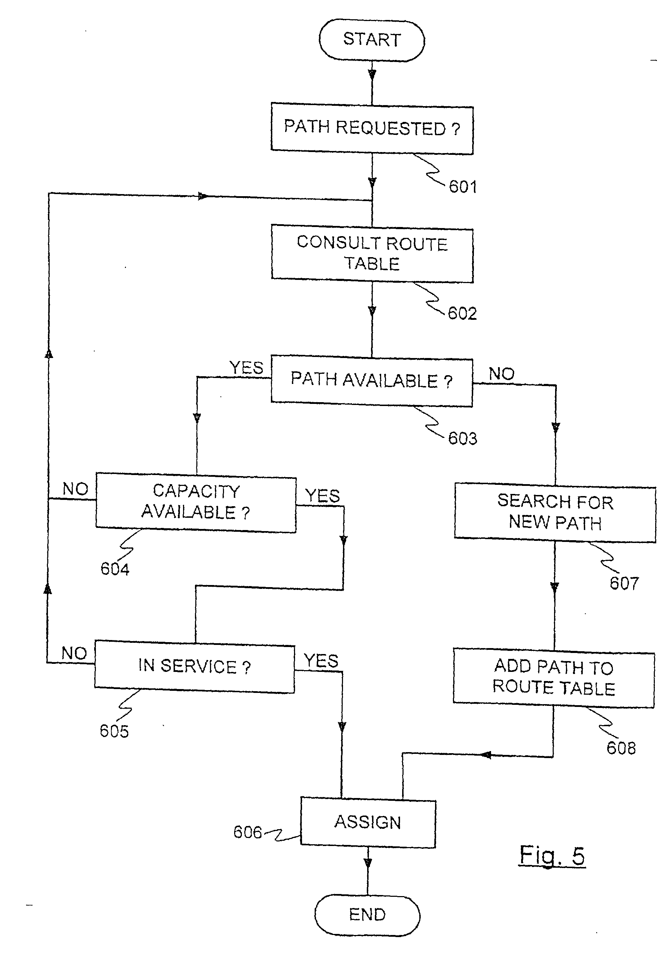

Figure 5 shows a flow chart illustrating an order handling process as performed by the domain manager 300, with reference to a rule store 330 and a route cost store 340. It should, however, be understood that the description applies equally to the second domain manager 400, with similar components being identified with the same reference numbers incremented by 100. Each domain manager implements the setting up of subpaths using a detailed domain model (to a higher degree of granularity than the network model used by the NCMS 200), which is not directly used by the NCMS 200.

A domain model store 320 provides information to allow the capacity currently available in the domains and available at a selected future time, to be modelled. Any planned maintenance can be programmed into the model, so that capacity which is currently out of service, or projected to be so, can be modelled as becoming available at the projected completion time of the maintenance planned. The order handling is processed within the domain model 320, and the capacity requirement is met by identifying suitable paths by following the rules obtained from the domain rules 330 and the domain route table 340. The results of this process are used to issue instructions to configure the nodes of each domain to meet the capacity at the required time. The status of the domain is monitored by the domain managers 300, which in turn updates the domain model thereby ensuring that the model remains a faithful reproduction of the domain.

To generate a subpath route, initially a request for a path between two domain nodes is received, step 601. The first function performed in the order handling process is to consult the route table 340, step 602. The domain route table 340 has information concerning a number of paths between nodes, which are either in common use or have been found by means of a search procedure using the domain model. Next, step 603, the availability of such a path is determined. If such a path is available the procedure proceeds to a further step 604 where the capacity available on that path is assessed. If there is an available path with adequate capacity the process proceeds to a further step 605 in which the availability of the path is checked, to ensure that the path is still available and has not been removed, e.g. as a result of a failure or routine maintenance. If the route table 340 has an available path with adequate capacity and which is still in service then that path is assigned to the requested user.

When the step of identifying whether a path is available, step 603, fails to find such a path, (which may be at the first iteration if the end-to-end path is unusual or heavily loaded) the process diverts to a path-search process 607 in which a new path is identified using the domain model and domain rules. Having identified a new path, this path is then added to the route table store 340, step 608, and assigned to the user. Future requests for traffic over the new path will then be offered the new path when the route table 340 is consulted in step 602, provided that the path is still available and capacity is available at the time required.

The above embodiments are to be understood as illustrative examples of the invention. Further embodiments of the invention are envisaged.

In the above, first and second sites are selected as two end-point connection sites. It should be understood that these first and second sites may be part of a larger set for a multi-site service. For example, in a VPN service the NMCS 200 may resolve a set of end-point connection sites into a star or a mesh depending on the client constraint. The domain manager(s) may then receive an order for a set of requested service end-points and create the required sub-services as either a mesh or a star topology. In addition, the resolution may depend upon the technology layer at which the domain manager operates. A star topology may be implemented by a domain manager (e.g. in IP) between a customer site and the edge of the domain, without such topology being modelled in the NCMS 200. Alternatively, the domain manager may implement a mesh, between each possible pair of end-points.

It should be understood that the term "connections" includes "connectionless" technology services, e.g. an IP service, in which connectionless packet routing is layered over a connection based physical or transport network. The term "connection" is not intended to be limited to a technological connection, but may include other types of physical relationships between two end-points.

Whilst the above embodiment describes the first and second domains as PDH and SDH domains, it should be appreciated that other combinations of domain types may be managed by the NMSC, including: other logical (technology) domains, such as xDSL, ATM, IP, MPLS, SONET, Ethernet and GigE, PSTN, Voice, FR, etc; physical bearer domains such as fibre, copper, etc,; geographic domains (regions being disparate or adjacent, and across multiple countries and/or operators); and service type domains such as point-to-point, single point and multi-point services types. It should be noted that the present invention may be used regardless of the network bearer protocol(s) used.

It is to be understood that any feature described in relation to one embodiment may also be used in other of the embodiments. Furthermore, equivalents and modifications not described above may also be employed without departing from the scope of the invention, which is defined in the accompanying claims.

## Claims

1. A method of operating a capacity management system for managing the set up of connection paths between nodes of a communications network comprising a plurality of interconnected network domains, each said domain comprising a domain management system for setting up connection paths between nodes within the domain in response to service orders, said method comprising:
storing data defining relationships between a plurality of connection sites, each connection site comprising at least one node within one of said plurality of domains and said connection sites comprising a plurality of interconnection sites comprising at least two nodes, of different ones of said plurality of domains, which are interconnectable for data communications;
identifying first and second connection sites between which a connection path is to be set up;
selecting a subset of said plurality of interconnection sites on the basis of relationships between the plurality of interconnection sites and the first connection site, as defined by said relationship data;
in response to selecting the subset, determining route costs for connection paths, between the first and second connection sites, corresponding to each of the subset of interconnection sites, the connection paths including first subpaths in a first domain and second subpaths in a second domain;
selecting a preferred connection path on the basis of at least the determined route costs.

2. A method according to claim 1, comprising generating service orders corresponding to the preferred connection path, and transmitting said service orders to the domain management systems of each domain through which the preferred connection path passes.

3. A method according to claim 1 or 2, wherein the first connection site comprises a first domain node and not a second domain node.

4. A method according to claim 3, the method comprising storing a domain preference rule, having the effect of favouring said second domain over said first domain, and employing said rule to select said subset of interconnection sites.

5. A method according to any preceding claim, wherein said relationship data comprises data identifying a geographical location for each of said plurality of connection sites,
and wherein the step of selecting said subset of interconnection sites comprises selecting said subset on the basis of at least relationships between the geographical location of the interconnection sites and the geographical location of the first connection site.

6. A method according to claim 5, wherein selecting on the basis of said geographical relationships comprises determining a geographical distance between the interconnection sites and the first connection site, and selecting interconnection sites which are geographically proximate said first connection site.

7. A method according to any preceding claim, wherein said relationship data comprises data identifying route costs between different ones of said plurality of connection sites,
and wherein the step of selecting said subset of interconnection sites comprises selecting said subset on the basis of at least route costs between the interconnection sites and the first connection site.

8. A method according to any preceding claim, comprising selecting said subset of interconnection sites on the basis of at least a stored threshold defining a number of interconnection sites which are selectable.

9. A method according to any preceding claim, wherein the method comprises the step of selecting a further subset of interconnection sites on the basis of relationships between the further plurality of interconnection sites and the second connection site, and
wherein, in the step of determining route costs for connection paths, the connection paths include first subpaths in a first domain, second subpaths in a second domain, and third subpaths not in said second domain.

10. A method according to claim 9, wherein said third subpaths are in said first domain.

11. A method according to claim 9 or 10, wherein said relationship data comprises data identifying a geographical location for each of said plurality of connection sites,
and wherein the step of selecting said further subset of interconnection sites comprises selecting said further subset on the basis of at least relationships between the geographical location of the interconnection sites and the geographical location of the second connection site.

12. A method according to claim 11, wherein selecting said further subset on the basis of said geographical relationships comprises determining a geographical distance between the interconnection sites and the second connection site, and selecting interconnection sites which are geographically proximate said second connection site.

13. A method according to any of claims 9 to 12, wherein said relationship data comprises data identifying route costs between different ones of said plurality of connection sites,
and wherein the step of selecting said further subset of interconnection sites comprises selecting said further subset on the basis of at least route costs between the interconnection sites and the second connection site.

14. A method according to any of claims 9 to 13, comprising selecting said further subset of interconnection sites on the basis of at least a stored threshold defining a number of interconnection sites which are selectable.

15. A method according to any preceding claim, wherein said first domain is a Synchronous Digital Hierarchy domain.

16. A method according to any preceding claim, wherein said second domain is a Pleseochronous Digital Hierarchy domain.

17. A method according to any preceding claim, wherein said first and second domains are highly geographically overlaid.

18. A capacity management system adapted to carry out the method of any of claims 1 to 17.

19. Computer software adapted to carry out the method of any of claims 1 to 17.

20. A computer readable medium comprising computer software adapted to carry out the method of any of claims 1 to 17.
